# EUROPÄISCHE PATENTSCHRIFT

(11) **EP 4 078 436 B1**
(45) Veröffentlichungstag und Bekanntmachung des Hinweises auf die Patenterteilung: **12.02.2025**
(21) Anmeldenummer: 20841884.8
(22) Anmeldetag: 08.12.2020
(51) Int. Cl.: G08G 1/16, G01S 7/48, G01S 17/931, G06T 7/73, G06V 20/58, G06V 40/10, G06V 40/20, G06V 10/75

(54) **VERFAHREN ZUR ERKENNUNG VON VERKEHRSTEILNEHMERN**
METHOD FOR THE DETECTION OF ROAD USERS
MÉTHODE DE DÉTECTION DES USAGERS DE LA ROUTE

(30) Priorität: 18.12.2019 DE 102019220009
(43) Veröffentlichungstag der Anmeldung: 26.10.2022
(73) Patentinhaber: Continental Autonomous Mobility Germany GmbH, 85057 Ingolstadt (DE)
(72) Erfinder: PFITZER, Martin, 90411 Nürnberg (DE); HEINRICH, Stefan, 90411 Nürnberg (DE); DU BOIS, Manuel, 90411 Nürnberg (DE); HACHFELD, Felix, 90411 Nürnberg (DE); STRIGEL, Elias, 90411 Nürnberg (DE)
(74) Vertreter: Continental Corporation
(86) Internationale Anmeldenummer: PCT/DE2020/200111
(87) Internationale Veröffentlichungsnummer: WO 2021/121490

(56) Entgegenhaltungen:
- WO-A1-2019/116099
- US-A1- 2018 253 595

## Beschreibung

Die Erfindung betrifft ein Verfahren zur Erkennung von Verkehrsteilnehmern, insbesondere Personen im Straßenverkehr. Aus dem Stand der Technik ist bekannt, Verkehrsteilnehmer mittels ADAS-Sensoren wie beispielsweise Kamera, Radar oder Lidar zu erkennen und grob in Person, Fahrzeug oder Tier zu klassifizieren. Weiterhin ist bekannt diese Verkehrsteilnehmer bspw. für eine Bewegungsprädiktion zu verfolgen.

So zeigt beispielsweise die DE102014207802B3 ein Verfahren und ein System zum proaktiven Erkennen einer Aktion eines Verkehrsteilnehmers. Hierfür werden mittels einer Kamera ein bildpunktweise strukturiertes Bild des Verkehrsteilnehmers erfasst und entsprechende Bilddaten erzeugt.

US 2018/253595 A1 bezieht sich auf ein Verfahren zur Vorhersage von Aktionen von Verkehrsteilnehmern. Zu diesem Zweck werden Objekte im Umfeld detektiert, deren jeweilige Posen erkannt, und daraus zukünftiges Verhalten abgeleitet.

WO 2019/116099 A1 bezieht sich auf ein Verfahren zur Vorhersage von Aktionen von Personen. Zu diesem Zweck werden Posen detektierter Personen analysiert, und daraus auf zukünftige Bewegungen der jeweiligen Person geschlossen.

Nachteilig hierbei ist jedoch, dass derzeitige Erfassungen und Klassifizierungen von Personen nicht immer ausreichend sind, da bei Personen im Straßenverkehr verschiedenste Verhaltens- und Fortbewegungsweisen möglich sind.

Es ist demnach eine Aufgabe der vorliegenden Erfindung ein Verfahren bereitzustellen, welches eine genauere und robustere Erfassung und Klassifizierung von Personen ermöglicht.

Diese Aufgabe wird durch den Gegenstand der unabhängigen Ansprüche 1 und 4 gelöst. Weitere vorteilhafte Ausgestaltungen sind Gegenstand der Unteransprüche.

Allgemein sind die Interaktions- und Kommunikationsmöglichkeiten der Verkehrsteilnehmer äußerst komplex. Es ist grundsätzlich möglich, einen Klassifikationsansatz so zu erweitern, dass nicht nur grobe Klassifikationsergebnisse wie Person oder Fahrzeug, sondern spezifischere Klassifikationsergebnisse, welche bspw. nähere Eigenschaften der Person beschreiben, erkannt werden können.

Dieser Ansatz ist jedoch in der Praxis schwierig umzusetzen, da er u.a. mit einem hohen Aufwand, bzgl. der Datenmenge und den damit zusammenhängenden Aufwänden für Datenaufnahme, Labelling etc. verbunden sind, da die Klassifikation in der Regel auf den Rohdaten, z.B. Kamerabild, angewandt wird.

Insbesondere ist es für eine sichere Trajektorienplanung wichtig zu wissen, ob eine Person als Fußgänger einzustufen ist, oder ob sich die Person bspw. mit einem Fortbewegungsmittel bewegt.

Erfindungsgemäß wird deshalb ein Verfahren zur Erkennung von Verkehrsteilnehmern, insbesondere Personen im Straßenverkehr, mit den folgenden Schritten vorgeschlagen:
- Aufnehmen zumindest eines Umgebungsbildes oder einer Folge von Umgebungsbildern mittels eines optischen Sensors eines Fahrzeugs,
- Detektieren einer Person in dem Umgebungsbild,
- Ermitteln einer Pose der detektierten Person;
- Ermitteln eines Vorhandenseins eines Fortbewegungsmittels der Person;
- Zuordnen eines Bewegungsprofils zu der Person basierend auf dem ermittelten Fortbewegungsmittel der Person.

Der optische Sensor ist hier bevorzugt eine Monokamera oder ein Stereokamerasystem. Denkbar wäre auch die Verwendung eines Surroundview Kamerasystems oder eine Kombination der vorgenannten Alternativen. Mit zumindest einer dieser Kameras wird ein Umgebungsbild bzw. eine folge an Umgebungsbildern aufgenommen. Auf dieses Umgebungsbild bzw. die Folge aus Bildern wird dann ein Algorithmus angewandt, welcher Objekte und Personen in Bildern erkennt. Geeignet hierfür sind beispielsweise sog. Convolutional Nerual Networks (CNN) bzw. neuronale Netze. Diese CNNs können unter anderem für eine Personenerkennung trainiert werden, um anhand von bestimmten Merkmalen in dem Umgebungsbild auf eine Person schließen zu können.

Für das Ermitteln der Pose der Person kann für die Person eine skelettähnliche Darstellung generiert werden. Diese skelettähnliche Darstellung wird mittels Detektion von Schlüsselpunkten bzw. Key-Points generiert, indem die erkannten Key-Points miteinander verbunden werden. Die skelettähnliche Darstellung stellt demnach eine relative Position und Ausrichtung einzelner Körperteile des Fußgängers dar. Aus diesen Informationen lässt sich die Pose einer Person ermitteln. Es kann hierfür beispielsweise ein Vergleich zwischen der detektierten Pose und einem Look-up-Table durchgeführt werden, um bspw. die Ausrichtung oder Körperhaltung der Person schneller einordnen zu können.

Für das Ermitteln des Vorhandenseins eines Fortbewegungsmittels werden Objekte betrachtet, welche aufgrund Ihrer Nähe der Person zugeordnet werden können. Auch hier kann neuronales Netz entsprechend trainiert werden, um bestimmte Objekte als Fortbewegungsmittel zu identifizieren und diese bspw. von getragenen Gepäckstücken zu unterscheiden.

Wird ein Fortbewegungsmittel zweifelsfrei erkannt, kann auf dieser Basis ein mögliches vordefiniertes Bewegungsprofil zugeordnet werden. Hier können ebenfalls bereits für bestimmte Fortbewegungsmittel wie beispielsweise Fahrrad, Skateboard oder Inline-Skates Rahmenparameter hinterlegt sein, welche in die Auswahl des Bewegungsprofils einfließen.

Im Kontext der vorliegenden Erfindung wird das Vorhandensein eines Fortbewegungsmittels durch betrachten einer Zeitsequenz aus Posen-Zuständen oder durch betrachten von Einzelbildern ermittelt. Die Betrachtung einer Zeitsequenz aus Posen-Zuständen ist dahingehend vorteilhaft, da bei der Verwendung eines bestimmten Fortbewegungsmittels eine Pose entweder dauerhaft eingenommen wird oder sich zumindest bestimmte Bewegungsmuster und somit verschiedene Posen wiederholen. So hat ein Fahrradfahrer beispielsweise eine bestimmte Pose inne. Bei einem Skateboardfahrer wiederholt sich ein bestimmtes Bewegungsmuster, wenn ein Fuß zum Anschieben verwendet wird und somit wiederholen sich bestimmte Posen innerhalb eines bestimmten Zeitraums mehrfach.

Allerdings ist auch ein Vorhandensein eines Fortbewegungsmittels basierend auf Einzelbildern zu erreichen. Dies ist insbesondere bei einer Sensordaten-Fusion, wie beispielsweise zwischen einem Radarsensor und einem Kamerasensor möglich. Durch den Radarsensor lassen sich beispielsweise Geschwindigkeiten bestimmter Gliedmaßen aufgrund der verfügbaren Dopplergeschwindigkeiten ermitteln. In Kombination mit dem Bild einer Kamera kann auf diese Weise ein Fortbewegungsmittel erkannt werden, da es für die Verwendung eines Fortbewegungsmittels beispielsweise ein bestimmtes Bewegungsmuster der Beine gibt.

Des Weiteren wird das Fortbewegungsmittel durch einen entsprechenden Klassifikator klassifiziert. Hierfür wird ein Klassifikator entsprechend antrainiert um auf Basis der Pose, und auf Basis der typischen Beinbewegungen, zwischen beispielsweise einem Inline-Skater, einem Skateboarder, einem normalen Fußgänger oder einem Radfahrer etc. zu unterscheiden.

Weiter ist bevorzugt, dass basierend auf dem ermittelten Fortbewegungsmittel eine Kritikalität der Person ermittelt wird. Diese Kritikalität beschreibt beispielsweise die Wahrscheinlichkeit, dass die Person die Fahrbahn kreuzt. Je nach Fortbewegungsmittel sind Richtungsänderungen schneller möglich. In Verbindung mit einer höheren Geschwindigkeit als der eines normalen Fußgängers stellt eine Person mit einem entsprechenden Fortbewegungsmittel ein höheres Risiko dar und muss entsprechend bewertet bzw. eingestuft werden, um ggf. Fahrfunktionen bzw. Eingriffsschwellwerte entsprechend anpassen zu können. Hierbei kann z.B. die Fahrgeschwindigkeit des Fahrzeugs reduziert werden oder ein Eingriffsschwellenwert eines EBA-Systems (Notbremsassistent) gesenkt werden, wenn eine höhere Kritikalität der erkannten Person ermittelt wird. Weiterhin kann der Bereich mit der erkannten Person häufiger abgescannt werden bzw. die ROI (Region of interest) vergrößert werden, um die Erkennung der Person für einen bestimmten Zeitraum sicherzustellen oder auf die Person direkt gerichtet werden.

In einer besonders bevorzugten Ausführungsform umfasst das prädizierte Bewegungsprofil eine maximale Geschwindigkeit, Freiheitsgrade der Person und/oder eine Bewegungsrichtung. Diese Unterschiedlichen Parameter können zu jedem einzelnen potentiell erkennbaren Fortbewegungsmittel beispielsweise in einem Look-up Table hinterlegt sein. Unter Freiheitsgraden werden im Lichte der Erfindung die verschiedenen Möglichkeiten zur Richtungsänderung bezogen auf die Richtung, den Winkel in Relation zu der Aktuellen Bewegungsrichtung und die Geschwindigkeit der Richtungsänderung. Je nach Fortbewegungsmittel sind mehr bzw. schnellere Richtungsänderungen möglich. Ein Inline-Skater kann beispielsweise schneller eine Richtungsänderung mit einem größeren Winkel durchführen, als beispielsweise ein Fahrradfahrer. Durch das Bewegungsprofil kann auch ein modell-basiertes Tracking optimiert werden, insbesondere im Hinblick auf die maximal erreichbaren Geschwindigkeiten in Verbindung mit dem Fortbewegungsmittel. Weiterhin kann sich das Fahrzeug schneller an eine Änderung der Bewegungsrichtung der Person anpassen, da eine genauere Prädiktion der Position der Person im nächsten Zeitschritt möglich wird.

Weiterhin wird erfindungsgemäß ein System zur Erkennung von Verkehrsteilnehmern, insbesondere Personen im Straßenverkehr vorgeschlagen, umfassend zumindest einen optischen Sensor zum Aufnehmen eines Umgebungsbildes oder einer Folge an Umgebungsbildern sowie eine Datenverarbeitungseinrichtung, welche dazu ausgestaltet ist
- das aufgenommene Umgebungsbild zu analysieren und eine Personenerkennung durchzuführen,
- eine Posenerkennung der Person durchzuführen,
- das Vorhandensein eines Fortbewegungsmittels im Bild zu ermitteln und
- basierend auf dem Fortbewegungsmittel ein Bewegungsprofil zu der Person zuzuordnen.

Die Datenverarbeitungseinrichtung verwendet dabei beispielsweise ein CNN (Convolutional Neural Network). Hiermit ist es der Datenverarbeitungseinrichtung möglich mit Hilfe von antrainierten Klassifikatoren eine Personen- und auch Posenerkennung durchzuführen. Weiterhin werden Klassifikatoren antrainiert, mittels welchen basierend auf bestimmten Merkmalen auf ein bestimmtes Fortbewegungsmittel geschlossen wird.

Zu jedem dieser Fortbewegungsmittel wird dann ein Bewegungsprofil zugeordnet.

Weitere vorteilhafte Ausgestaltungen und Ausführungsformen ergeben sich aus den Zeichnungen. Darin zeigen:
Fig. 1 ein schematisches Ablaufdiagramm einer Ausführungsform der Erfindung;
Fig. 2 eine schematische Darstellung einer Ausführungsform der Erfindung.

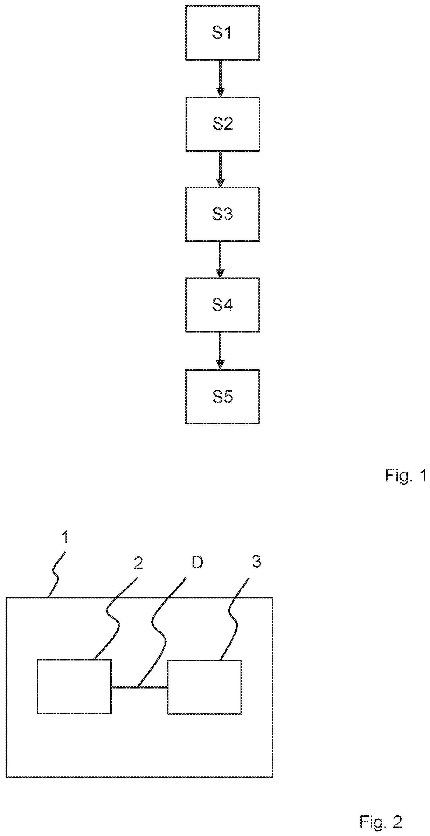

Figur 1 zeigt ein schematisches Ablaufdiagramm einer Ausführungsform der Erfindung. In Schritt S1 wird ein Umgebungsbild oder eine Folge von Bildern mittels zumindest eines optischen Sensors 2 aufgenommen. In Schritt S2 wird in diesem Umgebungsbild eine Person detektiert. In einem weiteren Schritt S3 wird eine Pose der detektierten Person ermittelt. Weiter wird in Schritt S4 das Vorhandensein eines Fortbewegungsmittels ermittelt. In einem nächsten Schritt S5 wird ein Bewegungsprofil zu der Person basierend auf dem ermittelten Fortbewegungsmittel der Person zugeordnet.

Figur 2 zeigt eine schematische Darstellung einer Ausführungsform der Erfindung. Hierbei ist ein System 1 zur Erkennung von Verkehrsteilnehmern, insbesondere Personen im Straßenverkehr in schematischer Darstellung gezeigt. Das System 1 umfasst dabei einen optischen Sensor 2 sowie eine Datenverarbeitungseinrichtung 3. Der optische Sensor 2 sowie die Datenverarbeitungseinrichtung 3 sind dabei über eine Datenverbindung D verbunden, mittels welcher Bilddaten vom optischen Sensor 2 an die Datenverarbeitungseinrichtung übertragen werden können. Es wäre denkbar, dass die Datenverarbeitungseinrichtung mit einem oder mehreren Aktuatoren verbunden ist, welche basierend auf den Ergebnissen der Datenverarbeitungseinrichtung das Fahrzeug entsprechend steuern. Die Datenverbindung D ist dabei bevorzugt kabelgebunden ausgestaltet. Es wären aber auch drahtlose Verbindungen wie beispielsweise WLAN, Bluetooth o.ä. denkbar.

### Bezugszeichenliste

- 1: System
- 2: Optischer Sensor
- 3: Datenverarbeitungseinrichtung
- D: Datenverbindung
- S1-S5: Verfahrensschritte

## Patentansprüche

1. Verfahren zur Erkennung von Verkehrsteilnehmern, insbesondere Personen im Straßenverkehr, mit den folgenden Schritten:
- Aufnehmen (S1) zumindest eines Umgebungsbildes oder einer Folge von Umgebungsbildern mittels eines optischen Sensors (2) eines Fahrzeugs,
- Detektieren (S2) einer Person in dem Umgebungsbild,
- Ermitteln (S3) einer Pose der detektierten Person;
- Ermitteln (S4) eines Vorhandenseins eines Fortbewegungsmittels der Person, wobei das Vorhandensein des Fortbewegungsmittels durch Betrachten einer Zeitsequenz aus Posen-Zuständen oder durch betrachten von Einzelbildern ermittelt wird, wobei das Fortbewegungsmittel durch einen entsprechenden Klassifikator klassifiziert wird und der Klassifikator auf Basis der Pose und der typischen Beinbewegungen das Fortbewegungsmittel klassifiziert;
- Zuordnen (S5) eines Bewegungsprofils zu der Person basierend auf dem ermittelten Fortbewegungsmittel der Person.

2. Verfahren nach einem der vorhergehenden Ansprüche,
**dadurch gekennzeichnet, dass**
basierend auf dem ermittelten Fortbewegungsmittel eine Kritikalität der Person ermittelt wird.

3. Verfahren nach Anspruch 1,
**dadurch gekennzeichnet, dass**
das prädizierte Bewegungsprofil eine maximale Geschwindigkeit, Freiheitsgrade der Person und/oder eine Bewegungsrichtung umfasst.

4. System (1) zur Erkennung von Verkehrsteilnehmern, insbesondere Personen im Straßenverkehr umfassend zumindest einen optischen Sensor (2) zum Aufnehmen eines Umgebungsbildes oder einer Folge an Umgebungsbildern sowie eine Datenverarbeitungseinrichtung (3), welche dazu ausgestaltet ist
- das aufgenommene Umgebungsbild zu analysieren und eine Personenerkennung durchzuführen,
- eine Posenerkennung der Person durchzuführen,
- das Vorhandensein eines Fortbewegungsmittels im Bild zu ermitteln, wobei das Vorhandensein des Fortbewegungsmittels durch Betrachten einer Zeitsequenz aus Posen-Zuständen oder durch betrachten von Einzelbildern ermittelt wird, wobei das Fortbewegungsmittel durch einen entsprechenden Klassifikator klassifiziert wird und der Klassifikator auf Basis der Pose und der typischen Beinbewegungen das Fortbewegungsmittel klassifiziert und
- basierend auf dem Fortbewegungsmittel ein Bewegungsprofil zu der Person zuzuordnen.

## Claims

1. Method for recognizing road users, in particular persons in road traffic, comprising the following steps:
- recording (S1) at least one environment image or a sequence of environment images by means of an optical sensor (2) of a vehicle,
- detecting (S2) a person in the environment image,
- determining (S3) a pose of the detected person;
- determining (S4) a presence of a means of transport of the person, wherein the presence of the means of transport is determined by considering a time sequence of pose states or by considering individual images, wherein the means of transport is classified by a corresponding classifier and the classifier classifies the means of transport on the basis of the pose and the typical leg movements;
- assigning (S5) a movement profile to the person based on the determined means of transport of the person.

2. Method according to any of the preceding claims,
**characterized in that**
a criticality of the person is determined based on the determined means of transport.

3. Method according to Claim 1,
**characterized in that**
the predicted movement profile comprises a maximum speed, degrees of freedom of the person and/or a direction of movement.

4. System (1) for recognizing road users, in particular persons in road traffic, comprising at least one optical sensor (2) for recording an environment image or a sequence of environment images and also a data processing device (3) configured
- to analyse the recorded environment image and to carry out person recognition,
- to carry out pose recognition of the person,
- to determine the presence of a means of transport in the image, wherein the presence of the means of transport is determined by considering a time sequence of pose states or by considering individual images, wherein the means of transport is classified by a corresponding classifier and the classifier classifies the means of transport on the basis of the pose and the typical leg movements; and
- to assign a movement profile to the person based on the means of transport.

## Revendications

1. Procédé permettant de reconnaître des usagers de la route, en particulier des personnes dans la circulation routière, comprenant les étapes suivantes consistant à :
- enregistrer (S1) au moins une image de l'environnement ou une série d'images de l'environnement au moyen d'un capteur optique (2) d'un véhicule,
- détecter (S2) une personne sur l'image de l'environnement,
- déterminer (S3) une posture de la personne détectée ;
- déterminer (S4) la présence d'un moyen de locomotion de la personne, dans lequel la présence du moyen de locomotion est déterminée en observant une séquence temporelle d'états de postures ou en observant des images individuelles, dans lequel le moyen de locomotion est classifié par un classificateur adéquat, et le classificateur classifie le moyen de locomotion sur la base de la posture et des mouvements typiques des jambes ;
- associer (S5) un profil de mouvement à la personne sur la base du moyen de locomotion déterminé de la personne.

2. Procédé selon l'une quelconque des revendications précédentes,
**caractérisé en ce que**
une criticité de la personne est déterminée sur la base du moyen de locomotion déterminé.

3. Procédé selon la revendication 1,
**caractérisé en ce que**
le profil de mouvement prédit comprend une vitesse maximale, des degrés de liberté de la personne et/ou une direction de mouvement.

4. Système (1) permettant de reconnaître des usagers de la route, en particulier des personnes dans la circulation routière, comprenant au moins un capteur optique (2) pour enregistrer une image de l'environnement ou une série d'images de l'environnement, ainsi qu'un dispositif de traitement de données (3) qui est conçu pour
- analyser l'image de l'environnement enregistrée et effectuer une reconnaissance de personnes,
- effectuer une reconnaissance de posture de la personne,
- déterminer la présence d'un moyen de locomotion sur l'image, la présence du moyen de locomotion étant déterminée en observant une séquence temporelle d'états de posture ou en observant des images individuelles, dans lequel le moyen de locomotion est classifié par un classificateur adéquat, et le classificateur classifie le moyen de locomotion sur la base de la posture et des mouvements typiques des jambes, et
- associer un profil de mouvement à la personne sur la base du moyen de locomotion.
